# NOUVEAU FASCICULE DE BREVET EUROPEEN

(11) **EP 1 519 796 B2**
(45) Date de publication et mention de la décision concernant l'opposition: **04.11.2009**
(45) Mention de la délivrance du brevet: 30.08.2006
(21) Numéro de dépôt: 03761616.6
(22) Date de dépôt: 12.06.2003
(51) Int. Cl.: B07C 3/14

(54) **CHRONOMARQUAGE D'OBJETS POSTAUX PAR SIGNATURE D'IMAGE ET MACHINE DE TRI POSTAL ASSOCIEE**
IDENTIFIKATIONSMARKIEREN VON POSTSTÜCKEN DURCH BILDSIGNATUR UND ZUGEHÖRIGE POSTBEARBEITUNGSMASCHINE
IDENTIFICATION TAGGING OF POSTAL OBJECTS BY IMAGE SIGNATURE AND ASSOCIATED MAIL HANDLING MACHINE

(30) Priorité: 26.06.2002 FR 0207950
(43) Date de publication de la demande: 06.04.2005
(73) Titulaire: Solystic, 94257 Gentilly Cedex (FR)
(72) Inventeur: DESPREZ, Olivier, F-78000 Versailles (FR); MIETTE, Emmanuel, F-95210 Saint Gratien (FR); MERLIVAT, Jean-Claude, F-75005 Paris (FR); CAILLON, Christophe, F-91220 Bretigny sur Orge (FR)
(74) Mandataire: Prugneau, Philippe
(86) Numéro de dépôt international: PCT/FR2003/001765
(87) Numéro de publication internationale: WO 2004/002638

(56) Documents cités:
- EP-A- 1 190 779
- EP-A- 1 345 181
- EP-B- 0 752 137
- EP-B- 0 773 841
- WO-A-02/17144
- WO-A-91/09688
- WO-A-91/11885
- DE-A- 3 942 932
- DE-A- 4 000 603
- DE-A- 19 644 163
- DE-A1- 3 932 374
- DE-C- 19 644 249
- DE-C- 19 836 767
- US-A- 4 838 435
- US-A- 5 697 504
- US-A- 5 770 841
- US-B- 6 303 889
- JOSEF KELLER VRLAG: 'Zeitschfrift für den Postbetriebsdients 30.Jahrgang', Septembre 1979

## Description

L'invention concerne une méthode pour le traitement d'objets postaux dans laquelle on forme une image numérique de la surface d'un objet postal comportant une information d'adresse et on associe un identifiant à l'image numérique de l'objet postal dans un système de gestion de données, notamment dans un système de vidéo-codage.

Dans une machine de tri postal avec vidéo-codage, les objets postaux passent devant une caméra qui forme une image numérique de chaque objet comportant une information d'adresse. Cette image numérique est traitée dans un système d'évaluation automatique d'adresse par OCR. Quand l'adresse postale peut être évaluée complètement par le système d'évaluation, l'objet est dirigé vers une sortie de tri correspondante de la machine. Dans le cas où l'adresse postale d'un objet ne peut pas être évaluée complètement, un code d'identification ou chronomarque (IdTag) de l'objet postal est imprimé sous la forme d'un code-barres sur la surface de l'objet et l'image numérique de l'objet est enregistrée en correspondance avec le code d'identification de l'objet dans un système de vidéo-codage. Pour un objet postal ayant une enveloppe en matière plastique, une étiquette papier est apposée sur l'objet avant l'impression du code-barres d'identification. Bien entendu, dans le cas de traitement de courriers à large spectre, la machine de tri postal comporte un détecteur de pli en matière plastique de manière qu'une étiquette est seulement apposée sur un courrier ayant une enveloppe extérieure en matière plastique.

Une méthode pour le traitement d'objets postaux telle que définie plus haut, selon laquelle l'identifiant associé à l'image numérique d'un objet postal est généré à partir d'un traitement de ladite image numérique est connue de US-6 303 889. L'identifiant est une signature d'image qui permet d'identifier l'objet postal parmi un ensemble d'objets postaux. Avec cette méthode pour le traitement d'objets postaux, il n'est pas nécessaire d'apposer un code-barres sur les objets postaux à traiter par vidéo-codage et une machine de tri postal mettant en oeuvre la méthode peut être simplifiée par suppression d'un périphérique d'impression de codes-barres, d'un détecteur de matière plastique et d'un système pour apposer des étiquettes sur les objets postaux. Le but de l'invention est de proposer une méthode pour générer une signature d'image qui est fortement discriminante et également robuste aux contraintes mécaniques et optiques dans le convoyage postal.

A cet effet, l'invention a pour objet une méthode selon la revendication 1.

L'invention s'étend à une machine de tri postal incluant un système de vidéo-codage dans lequel des images numériques de la surface d'objets postaux sont enregistrées en mémoire en correspondance avec des identifiants obtenus avec la méthode définie ci-dessus. Plus particulièrement, on connaît des systèmes de vidéo-codage fonctionnant en temps différé comme indiqué plus haut et comportant des systèmes d'impression de codes-barres. On connaît également des systèmes de vidéo-codage fonctionnant en temps réel qui n'exploitent pas forcément des systèmes d'impression de codes-barres mais qui nécessitent la présence d'une ligne à retard dans la machine de tri postal. La machine de tri postal selon l'invention comporte un système de vidéo-codage fonctionnant quasiment en temps-réel et qui n'utilise pas de ligne à retard et le cas échéant qui n'utilise pas non plus de système d'impression de codes-barres. Si cette machine de tri postal est équipée d'un système d'impression de codes-barres, ces codes d'identification peuvent avantageusement être utilisés avec les signatures pour la récupération des données de tri dans le système de vidéo-codage.

La méthode d'extraction de signatures et la machine de tri postal selon l'invention sont maintenant décrites plus en détail ci-après et illustrées par les dessins annexés.

La figure 1 illustre très schématiquement l'extraction de la première composante de la signature d'un objet postal.

La figure 2 illustre très schématiquement l'extraction de la seconde composante de la signature d'un objet postal.

La figure 3 illustre très schématiquement une machine de tri postal exploitant l'extraction de signatures à partir de l'image numérique des objets postaux.

La méthode pour le traitement d'objets postaux selon l'invention est destinée à être mise en oeuvre dans une machine de tri postal incluant un système de vidéo-codage dans lequel des images numériques de la surface des objets postaux sont enregistrées en mémoire en correspondance avec des identifiants.

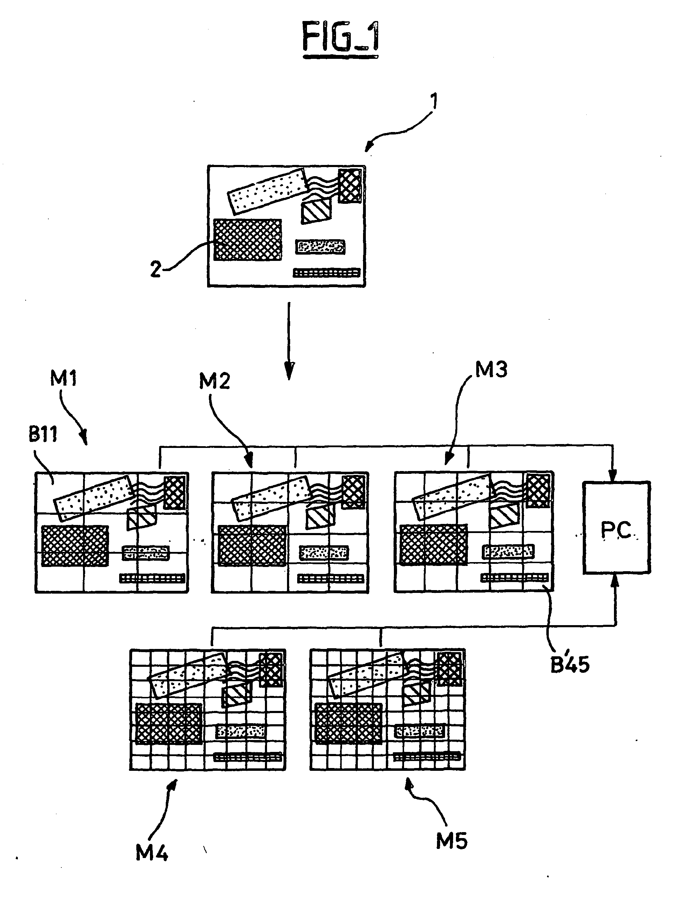

La figure 1 montre une image numérique 1 d'un objet postal, généralement une image numérique en niveaux de gris, comprenant entre autres une information d'adresse 2. L'image numérique 1 d'un objet postal comportant l'information d'adresse 2 est traitée automatiquement par un calculateur pour générer un identifiant de l'objet postal. Le calculateur fait en principe partie du système de vidéo-codage.

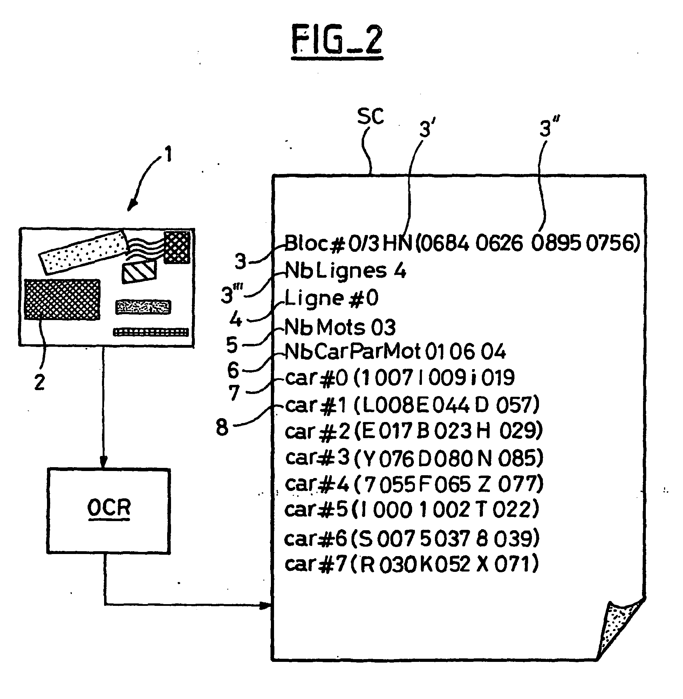

L'identifiant est une signature comprenant une première composante PC, représentée figure 1, et une seconde composante SC, représentée figure 2. Ces deux composantes PC et SC de la signature doivent en principe être indépendantes l'une de l'autre.

La première composante PC est représentative d'une caractéristique physique de l'image numérique 1 et est par exemple extraite par analyse statistique de la luminance des points de l'image numérique 1 qui aura subi préalablement une succession de filtrages abaissant le niveau de résolution de l'image afin de réduire les temps de traitement pour l'analyse statistique et de disposer d'un contenu de type basse-fréquence lequel est peu sensible aux fluctuations de luminance lors d'acquisitions multiples. La luminance d'un point de l'image correspond à la valeur de niveau de gris du point de l'image.

A partir de l'image numérique 1 basse résolution d'un objet ou pli postal, on peut extraire par calcul, des attributs globaux tels que la hauteur et la largeur du pli postal, valeur de luminance maximale - minimale - moyenne des points de l'image numérique, écart-type - énergie - entropie des valeurs de luminance.

On peut également extraire par calcul, des attributs locaux relatifs à des parties distinctes de l'image numérique. La figure 1 montre l'image numérique 1 subdivisée en plusieurs parties distinctes B11,B'45 issues de différents quadrillages M1,M2,M3,M4,M5 dans l'image numérique 1. Le quadrillage M1 définit ici 3x3 parties distinctes. Le quadrillage M5 définit 8x10 parties distinctes. Le nombre de parties distinctes dans un quadrillage et le nombre de quadrillages peut être un paramètre de l'analyse statistique appliquée à l'image numérique pour extraire la première composante PC de la signature. A partir de chaque partie telle que B11 et B'45 de l'image numérique issue d'un quadrillage tel que M1 ou M3, on peut extraire des attributs locaux tels que la valeur de luminance maximale - minimale - moyenne des points de cette partie de l'image numérique, écart-type - énergie - entropie des valeurs de luminance dans cette partie de l'image numérique. Ces attributs locaux contiennent une information d'autant plus discriminante que les objets postaux sont hétérogènes. On peut également extraire de cette partie de l'image numérique un histogramme représentatif de la distribution des valeurs de luminance. Plusieurs histogrammes pourront être extraits pour des parties distinctes de l'image numérique 1 et traduisent une information de texture discriminante peu sensible aux faibles variations dans les images numériques formées successivement pour le même objet postal.

L'ensemble des attributs globaux et locaux extraits pour une image numérique constituent la première composante PC de la signature.

Figure 2, la seconde composante SC de la signature est extraite par un système de reconnaissance optique de caractères OCR appliqué sur l'image numérique 1 comportant une information d'adresse 2. Un système de reconnaissance optique de caractères classiquement utilisé dans une machine de tri postal est capable de fournir des données indicatives de la position de blocs d'informations textuels détectés dans l'image numérique, comme le bloc contenant l'information d'adresse 2. Ces données indicatives de position peuvent être les coordonnées spatiales et d'orientation de la zone rectangulaire formant le bloc d'adresse 2. Le système OCR est apte également à fournir une description textuelle de chaque bloc d'information détecté dans l'image numérique, en particulier le bloc d'adresse 2. Une description textuelle d'un bloc d'information tel que 2 peut consister dans l'indication du nombre de lignes de caractères détectées dans le bloc d'information, le nombre de mot détecté dans chaque ligne de caractères, le nombre de caractères détectés dans chaque mot de chaque ligne de caractères.

La figure 2 montre un exemple de description textuelle d'un bloc d'information constituant la seconde composante SC de la signature d'un objet postal.

Sur la figure 2 :
« BLOC#0/3 » désigné par 3, référence le bloc d'information 0 parmi les 3 blocs d'information détectés dans l'image numérique 1 ;
« HN » désigné par 3', est une donnée indicative de l'orientation du bloc d'information 0 dans l'image numérique ;
« (0684 0626 0895 0756) » désigné par 3", sont des données représentatives des coordonnées spatiales du bloc d'information 0 dans l'image numérique ;
« NbLignes 4 » désigné par 3"', indique que le bloc d'information 0 comporte 4 lignes de caractères ;
« Ligne #0 » désigné par 4, référence la première ligne de caractères détectée dans le bloc d'information 0 ;
« NbMots 03 » désigné par 5, est une donnée indiquant que 3 mots ont été détectés dans la première ligne de caractères ;
« NbCarParMot 01 06 04 » désigné par 6, sont des données indiquant que les 3 mots de la première ligne de caractères comprennent respectivement 1, 6 et 4 caractères ;
« car #0 (1 007 I 009 i 019) » désigné par 7, sont des données indiquant que pour le premier caractère de la première ligne de caractères, l'OCR a identifié 3 caractères candidats respectivement 1, 1 et i avec des distances de ressemblance respectivement de 007, 009 et 019 ;
« car#1 (L 008 E 009 D 057) » désigné par 8, sont des données indiquant que pour le second caractère de la première ligne de caractères, L'OCR a identifié 3 caractères candidats respectivement L, E et D avec des distances de ressemblance respectivement de 008, 009 et 057 ;
... et ainsi de suite pour les autres caractères de la première ligne de caractères sachant qu'une valeur 0 pour la distance de ressemblance est la distance la plus faible, c'est-à-dire représente l'écart le plus faible par rapport au caractère idéal.

La génération d'une signature part donc de l'idée qu'une image numérique d'un objet postal est un signal bidimensionnel interprétable dont le contenu peut être appréhendé tant au niveau physique qu'au niveau symbolique. Du fait que la signature d'un objet postal est formée de deux composantes PC et SC complémentaires, il est possible de distinguer deux objets postaux ayant sensiblement une même adresse postale par une discrimination de la première composante PC des signatures. Inversement, lors de la comparaison de deux signatures du même objet postal extraites respectivement à partir de deux images numériques de l'objet postal, il est possible de se baser sur la seconde composante SC des deux signatures pour reconnaître que ces deux signatures identifient le même objet postal.

A partir d'une signature courante extraite d'une image numérique d'un objet postal comme indiquée plus haut, la recherche dans un système de gestion de données d'un identifiant enregistré sous la forme d'une signature à deux composantes PC et SC qui correspond à la signature courante est basée sur la comparaison des composantes PC et SC de la signature courante et des signatures enregistrées dans le système de gestion de données.

La comparaison des composantes PC des signatures dans le cas d'une composante PC constituée d'attributs globaux et locaux comme indiquée plus haut peut commencer par la comparaison des attributs globaux respectifs qui inclut un seuillage des valeurs absolues des variations sur chaque attribut global pour faire un premier filtrage parmi les signatures enregistrées dans le système de gestion. Ce filtrage permet d'éliminer les signatures fortement dissemblantes de la signature courante et de retenir un faible nombre de signatures candidates. Puis une comparaison des attributs locaux de la composante PC de la signature courante et des signatures candidates respectivement peut être effectuée pour réduire le nombre de signatures candidates. Cette comparaison peut être basée d'abord sur le calcul d'un coefficient de corrélation normalisé glissant entre les histogrammes correspondants dans la signature courante et les signatures candidates respectivement ce qui permet de s'affranchir des variations de luminance entre les deux images numériques comparées et ensuite sur le calcul d'un coefficient de corrélation normalisé, par type d'attribut, entre les autres attributs locaux dans la signature courante et dans les signatures candidates respectivement qui permet de s'affranchir des problèmes de normalisation dus à la différence de variabilité de chaque attribut local. Les signatures candidates sont ensuite triées par ordre de ressemblance décroissant sur la base des coefficients de corrélation et un nombre fixé de signatures candidates les plus ressemblantes sont retenues.

La comparaison des composantes SC des signatures peut commencer par une mesure de la ressemblance des données indicatives de position des blocs d'information pour obtenir une présélection des signatures candidates. Les signatures candidates peuvent ensuite être triées par ordre décroissant à partir d'une mesure de ressemblance des descriptions textuelles des blocs d'information.

La comparaison des composantes PC peut être privilégiée par rapport à la comparaison des composantes SC ou inversement en fonction du type d'objets postaux traités. Pour un lot de lettres ayant une grande proportion de lettres manuscrites, la comparaison des composantes PC des signatures sera privilégiée pour rechercher une signature dans le système de gestion de données. Par contre pour un lot d'envois en nombre, la comparaison des composantes SC des signatures sera privilégiée.

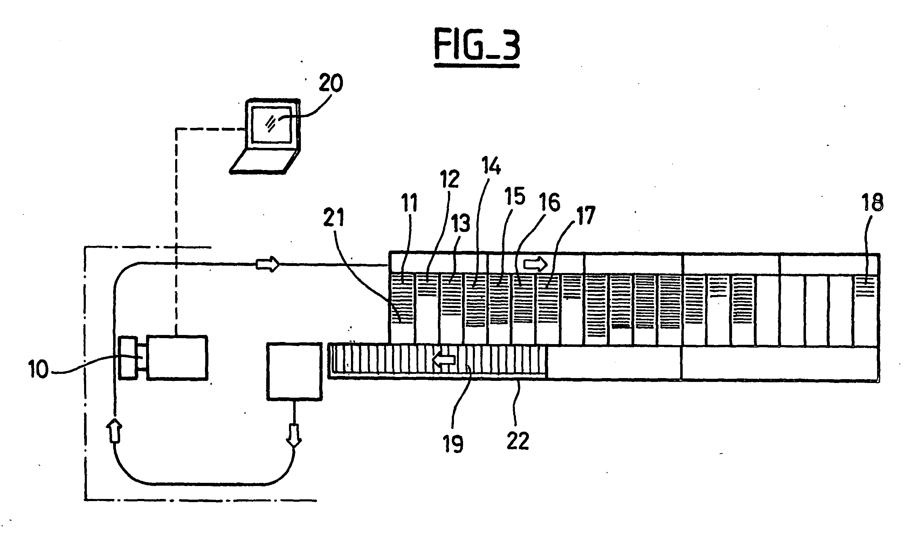

La figure 3 illustre une machine de tri postal simplifiée sans périphérique d'impression de codes-barres et sans ligne à retard mais avec un système de vidéo-codage dans lequel sont enregistrées des images numériques 1 en correspondance avec des identifiants générés à partir des images numériques comme décrit ci-dessus. Cette machine de tri postal est plus particulièrement utilisée pour effectuer un tri acheminement du courrier vers les grandes destinations et les bureaux distributeurs. Elle comporte un système de reconnaissance automatique d'adresse 10 incluant une caméra pour former une image numérique de chaque objet et un OCR pour la reconnaissance optique de caractères, un ensemble de sorties de tri ou empileurs 11-18 vers lesquelles sont orientés les objets postaux sérialisés par un dépileur 10'. Un certain nombre d'empileurs 11-14 dits empileurs de rejet, qui sont situés à proximité du dépileur, sont réservés pour récupérer les objets postaux pour lesquels l'adresse postale ne peut pas être résolue automatiquement.

L'exploitation d'une telle machine de tri postal comporte trois phases :
Phase 1 : l'opérateur charge le plan de tri sur la machine et effectue sur le lot de courrier 19 à traiter une première passe de tri durant laquelle toutes les lettres sont soumises au système de reconnaissance automatique d'adresse 10. Dans le cas d'une résolution totale de l'adresse postale, la lettre est dirigée vers un empileur constituant une sortie de tri. Dans le cas contraire, la lettre est dirigée vers un empileur de rejet. Les lettres en rejet sont placées dans un empileur par ordre chronologique, les premières lettres en rejet étant placées dans un premier empileur de rejet, les secondes lettres en rejet étant placées dans un second empileur de rejet adjacent au premier empileur et ainsi de suite. Les lettres en rejet ont fait l'objet d'une extraction de signature comme indiquée plus haut et les images numériques des lettres en rejet sont enregistrées en mémoire dans le système de vidéo-codage 20 en correspondance avec les signatures des lettres. Ces signatures sont enregistrées dans un fichier mémoire en séquence dans l'ordre chronologique d'arrivée des lettres dans les empileurs de rejet. De préférence, au moins un pli intercalaire 21 est placé en tête de chaque empileur de rejet pour être détecté et pour identifier l'empileur de rejet (et son contenu) avant une seconde passe. La détection du pli intercalaire 21 lors de la seconde passe des lettres en rejet dans la machine de tri évite à l'opérateur une intervention sur la machine de tri pour le traitement en seconde passe des lettres en rejet.
Phase 2: Elle peut commencer avant la fin de la phase 1. Dès que commence l'exploitation, les images numériques des lettres en rejet sont traitées par le système de vidéo-codage 20 de façon classique en soi. Le nombre d'opérateurs de vidéo-codage est de préférence choisi pour que l'ensemble des lettres en rejet soient traitées dans les deux ou trois minutes qui suivent la fin de la première passe.
Phase 3 : L'opérateur de la machine charge sur le magasin 22 du dépileur les lettres en rejet dans l'ordre chronologique où elles ont été déchargées dans les empileurs de rejet. Ce chargement peut s'effectuer par un simple glissement des lettres en rejet vers le magasin du dépileur si les empileurs de rejet sont très proches du dépileur. Quand le pli intercalaire sérialisé par le dépileur 10' est détecté par le lecteur de codes-barres (non représenté sur la figure 3 mais disposé en amont du système 10 dans le sens de circulation des lettres symbolisé par des flèches le long du circuit de convoyage), la machine de tri se configure pour une seconde passe des lettres en rejet comme cela est connu de l'homme de l'art. Puis chaque lettre en rejet sérialisée par le dépileur est soumise dans le système d'évaluation automatique d'adresse à une nouvelle prise d'image numérique pour une nouvelle extraction de signature sur la base de laquelle est menée, par l'intermédiaire d'une comparaison de signatures, une récupération d'informations de tri dans la mémoire du système de vidéo-codage. La lettre en rejet est ensuite dirigée vers une sortie de tri correspondante. Les lettres en rejet pour lesquelles l'adresse postale n'a pas pu être résolue par l'intermédiaire du système de vidéo-codage ou pour lesquelles la récupération des informations de tri n'a pas pu aboutir sont dirigées définitivement vers un empileur de rejet pour être triées manuellement.

La machine de tri postal représentée sur la figure 3 a un système de vidéo-codage qui fonctionne de façon immédiate en comparaison d'un système de vidéo-codage en temps différé et elle n'est pas équipée d'une ligne à retard comme c'est le cas d'un machine de tri postal à vidéo-codage temps réel. Il en résulte une diminution du coût de la machine et une diminution des risques d'incidents dans le traitement du courrier. Le nombre d'opérateurs de vidéo-codage est équivalent à celui requis pour une exploitation avec vidéo-codage en temps différé. La machine de tri postal peut être facilement agencée pour que les lettres en rejet à la suite de la première passe soient chargées par simple glissement sur le magasin du dépileur. Ainsi, les lettres en rejet à la suite de la première passe ne quittent pas la machine de tri pour subir une seconde passe et il en résulte un gain de temps dans le traitement du courrier. A la place des plis intercalaires marquant le début de la seconde passe, on pourrait indiquer ce début de la seconde passe par une action explicite au pupitre de commande de la machine.

Si la machine de tri postal est équipée d'un système d'impression de codes-barres disposé en aval du système d'évaluation 10, le système de vidéo-codage peut maintenir en mémoire les codes d'identification des lettres devant effectuer une seconde passe en correspondance avec les signatures extraites pour ces lettres. Lors de la seconde passe d'une lettre en rejet, on effectue d'abord une lecture par machine du code-barres d'identification en amont du système d'évaluation 10. Si le code d'identification peut être lu correctement, il est exploité pour la récupération des informations de tri dans le système de vidéo-codage 20. Dans le cas contraire, la signature de la lettre en rejet est extraite par le système 10 et sur la base de cette signature, les informations de tri sont récupérées dans le système de vidéo-codage 20 comme indiqué plus haut. Pour accélérer la récupération des informations de tri dans le système de vidéo-codage, le dernier code d'identification reconnu avant celui (non reconnu) de la lettre courante est maintenu en mémoire et est utilisé pour localiser la zone du fichier mémoire dans lequel sont enregistrées les signatures candidates pour la signature courante avec l'hypothèse que les signatures sont enregistrées en séquence de façon chronologique dans le fichier des signatures en correspondance avec les codes d'identification de lettres en rejet.

## Revendications

1. Méthode pour le traitement d'objets postaux dans laquelle on forme une image numérique (1) de la surface d'un objet postal comportant une information d'adresse (2) et on associe un code d'identification ou signature à l'image numérique de l'objet postal dans un système d'évaluation automatique d'adresse, cette signature d'image étant générée à partir d'un traitement automatique de ladite image et servant d'index pour la récupération de données en mémoire dans le système d'évaluation, cette signature comprenant une première composante (PC) dite composante image représentative de caractéristiques physiques de l'image et une seconde composante (SC) dite composante postale, extraite par reconnaissance optique de caractères (OCR) dans l'image, représentative de caractéristiques de l'information d'adresse, **caractérisée en ce que** ladite composante image (PC) comprend au moins un attribut dit « global » relatif à l'image dans son ensemble et des attributs dits « locaux » relatifs respectivement à des parties distinctes (B11, B'45) de l'image issues de plusieurs subdivisions de tailles différentes (M1,M2,M3,M4,M5) de l'image, chaque attribut local relatif à une partie d'image étant au moins un histogramme représentatif d'une distribution des valeurs de luminance des points de ladite partie d'image.

2. Méthode selon la revendication 1, dans laquelle les parties distinctes de l'image sont issues de plusieurs quadrillages de l'image de tailles différentes.

3. Méthode selon l'une des revendications 1 ou 2, comprenant les étapes consistant à abaisser le niveau de résolution de l'image pour l'amener à une valeur basse fréquence et calculer lesdits attributs de la composante image à partir des points de l'image en basse fréquence.

4. Méthode selon l'une de revendications précédentes, dans laquelle pendant une première passe de tri d'un objet postal, on forme une première image de la surface de l'objet pour générer une première signature qui est enregistrée dans le système d'évaluation automatique d'adresse et dans lequel pendant une seconde passe de tri dudit objet postal, on forme une seconde image de la surface de l'objet pour générer une signature courante et dans lequel on balaie des premières signatures enregistrées en mémoire dans le système d'évaluation pour détecter une concordance avec ladite signature courante.

5. Méthode selon la revendication 4, dans laquelle on compare d'abord les attributs globaux puis ensuite les attributs locaux de la composante image respectivement d'une première signature et de la signature courante pour détecter une concordance.

6. Méthode selon la revendication 5, dans laquelle la comparaison des attributs locaux entre une première signature et la signature courante est basée sur le calcul d'un coefficient de corrélation normalisé glissant.

7. Méthode selon la revendication 6, dans laquelle on effectue une mesure de ressemblance des composantes postales respectivement d'une première signature et de la signature courante pour détecter une concordance.

8. Méthode selon la revendication 7, dans laquelle la composante postale d'une signature est obtenue à partir d'un traitement OCR et comprend des premières données indicatives de la position et de l'orientation spatiale du bloc d'information d'adresse dans l'image et des secondes données consistant en une description textuelle de l'information d'adresse.

9. Méthode selon la revendication 8, dans laquelle on effectue d'abord une mesure de ressemblance sur les premières données des composantes postales et ensuite une mesure de ressemblance sur les secondes données des composantes postales respectivement d'une première signature et de la signature courante pour détecter une concordance.

10. Machine de tri postal dans laquelle on forme une image numérique de la surface d'un objet postal comportant une information d'adresse et on associe un identifiant à l'image numérique de l'objet postal dans un système de vidéo-codage (20), **caractérisée en ce que** la machine est agencée pour générer l'identifiant associé à l'image numérique d'un objet postal par une méthode selon l'une des revendications 1 à 9.

11. Machine de tri postal selon la revendication 10, comprenant des sorties sous la forme d'empileurs (11-18) dont un certain nombre, dits empileurs de rejet (11-14), sont réservés pour la réception d'objets postaux en rejet dont l'adresse postale n'a pas pu être évaluée lors d'une première passe dans la machine.

12. Machine de tri postal selon la revendication 11, dans laquelle au moins un objet postal intercalaire (21) est disposé en tête d'un empileurde rejet pour être détecté avant une seconde passe dans la machine des objets postaux en rejet.

13. Machine de tri postal selon la revendication 10, comprenant un système d'impression et de lecture de codes-barres identifiant des objets postaux et dans laquelle les codes d'identification sont enregistrés en correspondance avec les signatures dans le système de vidéo-codage (20).

14. Machine de tri selon la revendication 13, dans laquelle des signatures et des codes d'identification sont générés lors d'une première passe d'objets postaux dans la machine et dans laquelle, lors d'une seconde passe dans la machine de ces objets postaux, le système de vidéo-codage est agencé pour rechercher une signature correspondant à un objet postal courant en utilisant le code d'identification d'un objet postal précédant l'objet postal courant dans la seconde passe.

## Claims

1. A method of processing postal objects, in which method a digital image (1) is formed of the surface of a postal object, which digital image includes address information (2), and an identification code or signature is associated with the digital image of the postal object in a system for automatically evaluating addresses, said image signature being generated from an automatic processing of said image and being used as an index to retrieve data recorded in said evaluating system, said signature comprising a first component (PC) said as "image component" representative of physical characteristics of the image and a second component (SC) said as "postal component", extracted by optical character recognition (OCR) from said image, said second component being representative of characteristics of the address information, said method being **characterized in that** said image component (PC) comprises at least an "overall attribute" relating to the image as a whole and "local attributes" relating respectively to distinct image portions (B11,B'45) resulting from several subdivisions at different scales (M1,M2,M3,M4,M5) of the image, each local attribute relating to an image portion being at least an histogram representative of a distribution of the luminance values of pixels in said image portion.

2. Method according to claim 1, in which said distinct image portions are resulting from several grids of said image of various scale.

3. Method according to any of the claims 1 or 2, comprising the steps of lowering the resolution level of said image to a low-frequency level and computing said attributes of the image component from pixels of said low-frequence image.

4. Method according to any of the preceding claims, in which during a first sorting pass of a postal object, a first image is formed of the surface of said object for generating a first signature recorded in said system for automatically evaluating addresses and in which during a second sorting pass of said postal object, a second image is formed of the surface of said object for generating a current signature and in which recorded first signatures are browsed into said evaluation system to detect a matching with said current signature.

5. Method according to claim 4, in which first said global attributes and after that said local attributes of said image component respectively of a first signature and of said current signature are compared to detect a matching.

6. Method according to claim 5, in which the comparison of said local attributes between a first signature and said current signature is based on the computing of sliding normalized correlation coefficient.

7. Method according to claim 6, in which a measure of similarity is made of said postal components respectively of a first signature and of said current signature to detect a matching.

8. Method according to claim 7, in which said postal component of a signature is computed from an OCR processing and comprises first data indicative of spatial position and orientation of address information block into the image and second data consisting of textual description of address information.

9. Method according to claim 8, in which a measure of similarity is first made on said first data of postal components and then a measure of similarity is made on said second data of postal components respectively of a first recorded signature and said current signature to detect a matching.

10. A postal sorting machine in which a digital image is formed of the surface of a postal object, which image includes address information, and an identifier is associated with the digital image of the postal object in a video-coding system (20), said postal sorting machine being **characterized in that** it is organized to generate the identifier associated with the digital image of a postal object by implementing a method according to any one of claims 1 to 9.

11. Postal sorting machine according to claim 10, including outlets in the form of stackers (11-18), of which a certain number, referred to as reject stackers (11-14), are reserved for receiving reject postal objects whose postal addresses could not be evaluated during a first pass through the machine.

12. Postal sorting machine according to claim 11, in which at least one separator postal object (21) is disposed at the head of a reject stacker for being detected before the reject postal objects are subjected to a second pass through the machine.

13. Postal sorting machine according to claim 10, including a system for printing and for reading bar codes identifying postal objects, and in which machine the identification codes are recorded in correspondence with the signatures in the video-coding system (20).

14. A postal sorting machine according to claim 13, in which signatures and identification codes are generated during a first pass of postal objects in the machine and in which, during a second pass in the machine of the same postal objects, the video-coding system is arranged to search a signature corresponding to a current postal object by using the identification code of a postal object preceding the current postal object in the second pass.

## Patentansprüche

1. Verfahren für die Verarbeitung von postalischen Gegenständen, in welchem man ein digitales Bild (1) der Oberfläche eines postalischen Gegenstands umfassend eine Adresseninformation (2) bildet und man einen Identifikationscode oder eine Signatur dem digitalen Bild des postalischen Gegenstands in einem automatischen Adressenevaluierungssystem zuordnet, wobei die Signatur des Bildes ausgehend von einer automatischen Bearbeitung des Bildes generiert wird und als Index für das Abrufen von in dem Evaluierungssystem gespeicherten Daten dient, wobei die Signatur eine als Bildkomponente bezeichnete erste Komponente (PC), die repräsentativ ist für physische Charakteristika des Bildes, und eine als postalische Komponente bezeichnete zweite Komponente (SC), die durch optische Erkennung von Buchstaben (OCR) in dem Bild extrahiert und repräsentativ für die Charakteristika der Adressinformation ist, umfasst,
**dadurch gekennzeichnet,**
**dass** die Bildkomponente (PC) wenigstens ein als "global" bezeichnetes Attribut bezüglich des Bildes in seiner Gesamtheit und als "lokale" bezeichnete Attribute bezüglich jeweils unterscheidbarer Partien (B11, B'45) des Bildes, die von verschiedenen Unterteilungen verschiedener Größen (M1, M2, M3, M4, M5) des Bildes stammen, umfasst, wobei jedes lokale Attribut bezüglich einer Partie des Bildes wenigstens ein für die Verteilung der Werte der Leuchtdichte der Punkte dieser Partie des Bildes repräsentatives Histogramm ist.

2. Verfahren nach Anspruch 1, in welchem die unterscheidbaren Partien des Bildes von mehreren Rasterungen des Bildes mit verschiedenen Größen stammen.

3. Verfahren nach einem der Ansprüche 1 oder 2, umfassend die Schritte Absenken des Auflösungsniveaus des Bildes, um es auf einen niedrigfrequenten Wert zu bringen, und Berechnen der Attribute der Bildkomponente ausgehend von den Bildpunkten bei niedriger Frequenz.

4. Verfahren nach einem der vorstehenden Ansprüche, in welchem bei einem ersten Sortierdurchgang eines postalischen Gegenstands ein erstes Bild der Oberfläche des Gegenstandes gebildet wird zum Generieren einer ersten Signatur, die in dem automatischen Adressenevaluierungssystem gespeichert wird, und in welchem während eines zweiten Sortierdurchgangs des postalischen Gegenstands ein zweites Bild der Oberfläche des Gegenstandes gebildet wird zum Generieren einer laufenden Signatur, und in welchem erste in dem Adressenevaluierungssystem gespeicherte Signaturen zum Erfassen einer Konkordanz mit der laufenden Signatur abgesucht werden.

5. Verfahren nach Anspruch 4, in welchem zunächst die globalen Attribute und anschließend die lokalen Attribute der Bildkomponente beziehungsweise einer ersten Signatur und der laufenden Signatur verglichen werden zum Ermitteln einer Konkordanz.

6. Verfahren nach Anspruch 5, in welchem der Vergleich der lokalen Attribute zwischen einer ersten Signatur und der laufenden Signatur auf der Berechnung eines normalisierierten gleitenden Korrelationskoeffizienten beruht.

7. Verfahren nach Anspruch 6, in welchem eine Ähnlichkeitsmessung der postalischen Komponenten beziehungsweise einer ersten Signatur und der laufenden Signatur ausführt zur Erfassung einer Konkordanz.

8. Verfahren nach Anspruch 7, in welchem die postalische Komponente einer Signatur erhalten wird ausgehend von einer OCR-Behandlung und auf die Position und die räumliche Orientierung des Adressinformationsblocks in dem Bild hinweisende erste Daten und aus einer textlichen Beschreibung der Adressinformation bestehende zweite Daten umfasst.

9. Verfahren nach Anspruch 8, in welchem zunächst eine Ähnlichkeitsmessung über die ersten Daten der postalischen Komponenten und anschließend eine Ähnlichkeitsmessung über die zweiten Daten der postalischen Komponenten beziehungsweise einer ersten Signatur und der laufenden Signatur ausgeführt wird zum erfassen einer Konkordanz.

10. Postgutsortiermaschine, in welcher man ein digitales Bild der Oberfläche eines postalischen Gegenstandes, umfassend eine Adresseninformation, bildet, und man ein Identifizierungsmerkmal dem digitalen Bild des postalischen Gegenstandes in einem Video-Codierungssystem (20) zuordnet,
**dadurch gekennzeichnet,**
**dass** die Maschine eingerichtet ist zum Generieren eines dem numerischen Bild eines postalischen Gegenstandes zugeordneten Identifizierungsmerkmal durch ein Verfahren nach einem der Ansprüche 1 bis 9.

11. Postgutsortiermaschine nach Anspruch 10, umfassend Ausgänge in Gestalt von Staplern (11-18), von denen eine bestimmte Anzahl, die als Ausschussstapler (11-14) bezeichnet werden, für den Empfang von postalischen Gegenständen reserviert sind, die zurückgewiesen werden, deren postalische Adresse bei einem ersten Durchgang in der Maschine nicht evaluiert werden konnte.

12. Postgutsortiermaschine nach Anspruch 11, in welcher wenigstens ein dazwischengelegter postalischer Gegenstand (21) am Kopfende eines Ausschussstaplers angeordnet ist, um vor einem zweiten Durchgang in der Maschine der zurückgewiesenen postalischen Gegenstände detektiert zu werden.

13. Postgutsortiermaschine nach Anspruch 10, umfassend ein Druck- und Lesesystem für Barcodes, die die postalischen Gegenstände identifizieren, und in welcher die mit den Signaturen korrespondierenden Identifikationscodes in dem Video-Codierungssystem (20) erfasst werden.

14. Sortiermaschine nach Anspruch 13, in welcher die Signaturen und die Identifikationscodes bei einem ersten Durchgang der postalischen Gegenstände in der Maschine generiert werden, und in welcher, bei einem zweiten Durchgang in der Maschine dieser postalischen Gegenstände, das Video-Codierungssystem eingerichtet ist zum Suchen einer einem laufenden postalischen Gegenstand entsprechenden Signatur unter Verwendung des Identifikationscodes eines postalischen Gegenstandes, der dem laufenden postalischen Gegenstand im zweiten Durchgang vorangeht.
